(19) Europäisches Patentamt
European Patent Office
Office européen des brevets

(11) **EP 0 757 919 A1**

(12) **EUROPÄISCHE PATENTANMELDUNG**

(43) Veröffentlichungstag:
**12.02.1997 Patentblatt 1997/07**

(51) Int. Cl.⁶: **B01D 53/047**, B01D 53/04, B01J 20/18

(21) Anmeldenummer: 96112062.3

(22) Anmeldetag: **26.07.1996**

(84) Benannte Vertragsstaaten:
**AT BE DE ES FI FR GB IT NL SE**

(30) Priorität: **08.08.1995 DE 19529094**

(71) Anmelder: **BAYER AG**
**51368 Leverkusen (DE)**

(72) Erfinder:
- **Reiss, Gerhard**
  **51375 Leverkusen (DE)**
- **Puppe, Lothar, Dr.**
  **51399 Burscheid (DE)**
- **Hees, Bruno**
  **40764 Langenfeld (DE)**

(54) **Verfahren zur Adsorption von Stickstoff aus Gasgemischen mittels Druckwechseladsorption mit Zeolithen**

(57)     Verfahren zur selektiven Adsorption von Stickstoff aus Gasgemischen mit weniger polaren Gaskomponenten bei Temperaturen von 20 bis 50°C mittels Druckwechseladsportion, bei dem das Gasgemisch durch einen Adsorber geleitet wird, der mit einer Schüttung aus Zeolithgranulat gefüllt ist, dadurch gekennzeichnet, daß im Adsorber mindestens zwei Schüttungen vorliegen, wobei in der Eintrittszone des Adsorbers ein Na-Zeolith X und in der Austrittszone des Adsorbers ein Li-Zeolith X vorliegt.

Printed by Rank Xerox (UK) Business Services
2.13.13/3.4

## Beschreibung

Die vorliegende Erfindung betrifft ein verbessertes Druckwechseladsorptionsverfahren zur Adsorption von Stickstoff aus Gasgemischen mit Zeolithgranulaten.

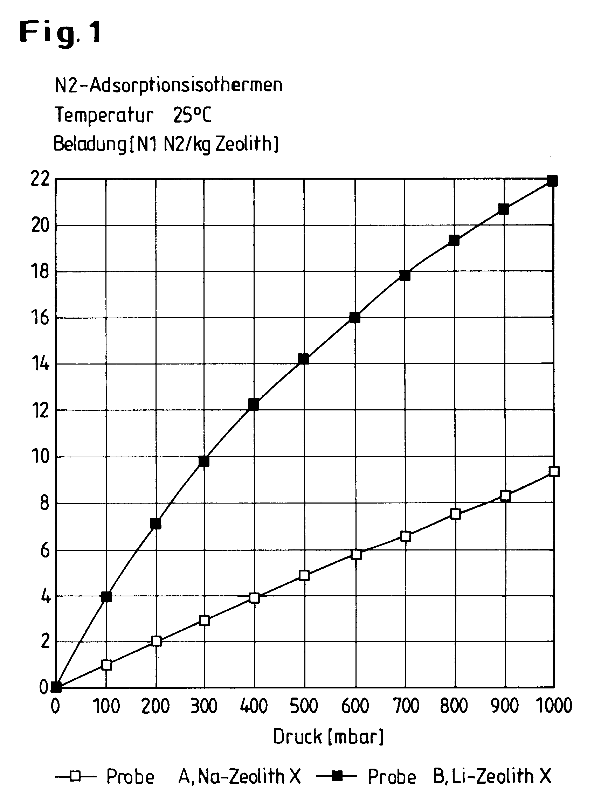

Die Erzeugung von Sauerstoff aus Luft bei Umgebungstemperatur wird industriell in großem Umfang mit Molekularsieb-Zeolithen durchgeführt (vgl. z.B. Gas Review Nippon, Seite 13, No. 5 1985). Hierbei wird die bevorzugte Adsorption von Stickstoff gegenüber Sauerstoff ausgenutzt, d.h. Sauerstoff und Argon werden beim Durchströmen der Luft durch eine Zeolithschüttung am Austritt der Schüttung als Produkt aufgefangen. Die Desorption des adsorbierten Stickstoffs kann dann z.B. durch Evakuierung der Schüttung erfolgen. Für diesen Fall bezeichnet man den Prozeß als Vakuum-Swing-Adsorption (VSA), im Gegensatz zur ebenfalls bekannten Pressure-Swing-Adsorption (PSA). Ein kontinuierlicher VSA-Prozeß ist durch folgende Verfahrensschritte gekennzeichnet: a) Durchleiten von Luft durch die Zeolithschüttung (bei z.B. 1 bar) und Abnahme von $O_2$-reichem Gas an der Austrittszone; b) Evakuieren der Schüttung mit einer Vakuumpumpe auf einen Unterdruck beispielsweise von etwa 100 bis 400 mbar im Gegenstrom der Luftströmung), c) Befüllen der Schüttung mit $O_2$-reichem Gas (beispielsweise auf 1 bar im Gegenstrom zur Luftströmung (siehe z.B. Fig 1)). Im PSA-Prozeß wird der Schritt b) bei ca. 1 bar unter Spülung mit einem Teil des $O_2$-reichen Gases durchgeführt. Im sogenannten PVSA-Prozeß (Kombination von VSA und PSA) wird die Trennung bei 1,1 bis 2 bar und die Desorption bei ca. 200 bis 500 mbar (Minimaldruck) durchgeführt. Ziel dieser Prozesse ist eine hohe Produktrate - bezogen auf eingesetzte Zeolithmenge - zu erhalten und eine hohe $O_2$-Ausbeute (Verhältnis von $O_2$-Menge im Produkt zu $O_2$-Menge der eingeströmten Luft) zu erreichen. Eine hohe $O_2$-Ausbeute schließt einen niedrigen Energiebedarf der Vakuumpumpe bzw. des Luftkompressors ein.

Bedingt durch die drei obengenannten Schritte hat man meist drei Zeolithschüttungen, d.h. drei Adsorber, die zyklisch betrieben werden. Die Adsorption kann im Falle des VSA-Verfahrens auch mit 2 Adsorbern betrieben werden (GB-A 1.559.325).

Die Wirtschaftlichkeit derartiger Adsorptionsanlagen wird durch die Investition, wie z.B. Adsorptionsmittelmenge, Vakuumpumpengröße, und insbesondere durch die Betriebskosten, wie Stromverbrauch der Vakuumpumpen, beeinflußt. Es wurden daher Zeolithe entwickelt, mit denen es möglich ist, hohe Stickstoffadsorptionen zu erreichen, so daß die eingesetzte Zeolithmenge klein gehalten bzw. sogar reduziert werden konnte. Hierzu werden, wie in EP-A-128 545 beschrieben, Ca-Zeolithe-A eingesetzt.

Weitere Entwicklungen auf diesem Gebiet zielen auf die Erhöhung der Selektivität des Stickstoffs gegenüber Sauerstoff ab.

Eine höhere Selektivität erreicht man durch den Einsatz von Lithium-Zeolith X (EP-A 297 542). Man erhält einen höheren Separationsfaktor sowie eine höhere $N_2$-Beladung gegenüber Na-Zeolith X.

Mit Li-Zeolith X wird gegenüber Na-Zeolith X auch ein besserer Energiewert erreicht (EP-A 461 478).

Zur weiteren Optimierung des Adsorptionsprozesses im Bereich der Lufttrennung hat man Adsorptionsmittelschüttungen vorgeschlagen, die aus verschiedenen Zonen mit unterschiedlichen Zeolithtypen bestehen.

Aus JP 87/148 304 ist ein Sauerstoffanreicherungsprozeß bekannt, bei dem anstelle eines Adsorbers mit einer Zeolithschüttung ein Adsorber mit speziellen Anordnungen verschiedener Zeolith-Typen eingesetzt wird. Der Adsorber enthält an der Lufteintrittsseite Zeolithe vom Na-X-, Na-Y- oder Ca-X-Typ und an der Luftaustrittsseite Zeolithe vom Ca-A-Typ.

In EP-A-374 631 wird in der Lufteintrittszone ein Ca-Zeolith A mit niedriger $N_2$-Adsorption und an der Austrittszone ein Ca-Zeolith A mit hoher $N_2$-Adsorption eingesetzt, wobei der $CaO/Al_2O_3$-Gehalt in beiden Zeolithen etwa gleich groß ist. Die unterschiedlichen $N_2$-Beladungen rühren von unterschiedlichen Aktivierungen her.

In EP-A 0 546 542 wird eine Schüttanordnung beschrieben, bei der in der Lufteintrittszone Li-Zeolith X und in der Luftaustrittszone Na-Zeolith X verwendet wird. Eine Anordnung, bei der in der Lufteintrittszone Na-Zeolith X und in der Luftaustrittszone Li-Zeolith X und Na-Zeolith X verwendet wird, ist gemäß den Ausführungen schlechter und nicht bevorzugt.

Aufgabe war es, ein energiegünsteres Druckwechseladsorptionsverfahren zur Adsorption von Stickstoff aus Gasgemischen mit weniger polaren Gaskomponenten zur Verfügung zu stellen, mit dem gegenüber dem Stand der Technik auch verbesserte $O_2$-Ausbeuten erreicht werden, die Herstellkosten des Sauerstoffs bei Lufttrennung zu senken und die Energiekosten gering zu halten.

Diese Aufgabe konnte überraschenderweise mit Kombinationen spezieller Zeolithtypen im Druckwechseladsorptionsverfahren gelöst werden.

Gegenstand der Erfindung ist ein Verfahren zur Adsorption von Stickstoff aus Gasgemischen mit weniger polaren Gaskomponenten, insbesondere aus Luft, bei Temperaturen zwischen 20 und 50°C mittels Druckwechseladsorption, bei dem das Gasgemisch durch einen Adsorber geleitet wird, der mit Schüttungen aus Zeolithgranulat gefüllt ist, welches dadurch gekennzeichnet ist, daß im Adsorber mindestens zwei, vorzugsweise zwei, Schüttungen vorliegen, wobei in der Eintrittszone des Adsorbers eine Schüttung aus Na-Zeolith X und in der Austrittszone des Adsorbers eine Schüttung aus Li-Zeolith X vorliegt.

Bei Druckwechseladsorptionsverfahren unterscheidet man insbesondere zwischen VSA-Verfahren (bei dieser Verfahrensvariante wird bevorzugt bei Evakuierungsdrücken zwischen 100 und 400 mbar und Adsorptionsdrücken zwischen 1 bar und 1,1 bar gearbeitet) PSA-Verfahren (hier wird bevorzugt bei einem Desorptionsdruck von 1 bis 1,1 bar und einem Adsorptionsdruck von 2 bis 6 bar gearbeitet) und PVSA (hier bei einem Evakuierungsdruck zwischen 200 und 700 mbar und einem Adsorptionsdruck zwischen 1,1 und 2 bar gearbeitet).

Mit der erfindungsgemäßen Kombination an speziellen Zeolithtypen konnte nicht nur die $O_2$-Ausbeute erhöht werden sondern auch der Energieverbrauch überraschenderweise reduziert werden.

Beim eingesetzten Li-Zeolith X handelt es sich vorzugsweise um einen Zeolithen, der ein molares $SiO_2/Al_2O_3$-Verhältnis von 2,0 bis 2,5 aufweist und dessen $AlO_2$-Tetraedereinheiten zu 80-100% mit Lithiumkationen assoziiert sind.

Der Anteil an Li-Zeolith X an der Gesamtmenge der Schüttungen im Adsorber beträgt vorzugsweise 20 bis 80%. Der Anteil hängt von der Lufteintrittstemperatur und vom Druckverhältnis zwischen maximalem Adsorptionsdruck und minimalem Desorptionsdruck ab.

Bei einem Adsorptionsdruck von 1 bis 1,5 bar sollte der minimale Absaugdruck vorzugsweise zwischen 100 und 500 mbar liegen.

Bevorzugt weist der Na-Zeolith X ein molares $SiO_2/Al_2O_3$-Verhältnis von 2,0 bis 3,0 auf.

Die technische Durchführung des erfindungsgemäßen Verfahrens wird ausführlich, z.B. in "Gas Separation und Purification" 1991, Vol. 5, June, Seiten 89 bis 90, beschrieben.

Bevorzugt kann der Gasstrom vor dem Durchleiten durch die Zeolithschüttung getrocknet werden, beispielweise mittels Durchleiten durch eine Trocknungsschicht aus Kieselgel.

Die Erfindung soll anhand der nachfolgenden Beispiele näher erläutert werden.

## Beispiele

Die untersuchten Zeolith-Typen wurden durch Ionenaustausch des entsprechenden Na-Zeolith X-Granulats hergestellt.

## Probe A (Na-Zeolith X)

Das Na-Zeolith X-Granulat wurde gemäß DE-A 1 203 238, Beispiel 2, hergestellt, wobei das so hergestellte Granulat etwa 18% Na-Zeolith A und 82% Na-Zeolith X enthielt. Das $SiO_2/Al_2O_3$-Verhältnis betrug 2,3, die Korngröße 1 - 2 mm und das Schüttgewicht ca. 650 g/l. Die Aktivierung erfolgte bei 600°C mit trockenem Stickstoff.

## Probe B (Li-Zeolith X)

12 Liter eines binderfreien Na-Zeolith X-Granulats, hergestellt nach DE-A 1 203 238, wurden in eine geeignete Säule mit beheizbarem Mantel eingefüllt. Anschließend pumpte man 690 Liter 1-molare Lithiumchlorid-Lösung innerhalb von 15 Stunden durch die Granalienschüttung. Die Temperatur betrug 85°C. Nach Beenden des Ionenaustausches wurde das Granulat mit Wasser gewaschen, das mit LiOH auf einen pH-Wert von 9 eingestellt wurde. Der Austauschgrad ($Li_2O/Al_2O_3$) des Zeolithen lag nach dem Ionenaustausch bei 96%.

Die Adsorptionsleistungen der Proben für Stickstoff sind aus Figur 1 und Tabelle 1 zu entnehmen.

Tabelle 1

| Adsorptionseigenschaften der Proben: | | |
|---|---|---|
| **Probe** | **A** | **B** |
| $N_2$-Adsorption bei 1 bar, 25°C in [Nl/kg] | 9,25 | 22 |
| $N_2/O_2$-Adsorptionsverhältnis bei 1 bar und 25°C | 2,65 | 4,55 |

## Versuchsdurchführung

Bei der Versuchsanlage und der Durchführung der Versuche wurden folgende Parameter konstant gehalten:

| Schüttdurchmesser | 500 mm |
|---|---|
| Schütthöhe der $Al_2O_3$-Schicht am Lufteintritt | 10% der MS-Höhe |
| Lufteintrittstemperatur | 40°C |
| Luftaustrittstemperatur | 40°C |
| Druck der Luft am Eintritt | 1.150 mbar (max.) |
| Höhe der Zeolithschicht | 1.600 mm |
| minimaler Abpumpdruck, Eintritt | 250 mbar |
| Druck am Anfang des Abpumpens | 900 mbar |
| Abpumpzeit | 30 Sekunden |
| Umfüllschritt (BFP-Zeit) | 6 Sekunden |

Die Absorber waren mit einer Isolierung versehen, um einen Wärmetransport mit der Umgehung auszuschließen. Die Wandstärke der Behälter betrug ca. 1 mm.

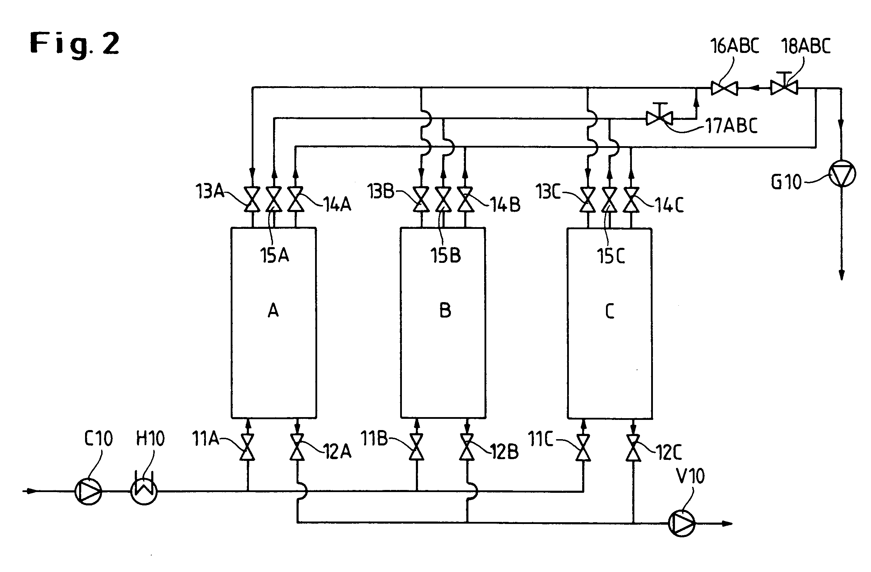

**Versuchsablauf für einen Adsorberzyklus gemäß Fig. 2:**

C 10 -        Lufgebläse
H 10 -        Kühler / Heizung
G 10 -        Produktgebläse
V 10 -        Vakuumpumpe
A, B, C -     Adsorber

**<u>Zeit 0 sec.:</u>**

Adsorber A hat die Adsorption beendet.

**<u>Zeit 0-6 sec. = BFP Zeit:</u>**

Am Adsorber A ist nur das Ventil 15A geöffnet. Am Adsorber C sind nur die Ventile 12C und 13C geöffnet. Dadurch strömt $O_2$-reiches Gas von Adsorber A über Ventil 15A, Regelventil 17ABC und Ventil 13C in Adsorber C. In Adsorber C wird hierbei der Evakuierungsschritt beendet, wobei der Druck vom minimalen Niveau (250 mbar) auf ein höheres Niveau ansteigt. In Adsorber A fällt der Druck vom maximalen Niveau (1.150 mbar) auf das Anfangsniveau (Anfangssaugdruck) von 900 mbar.

Adsorber B startet die Lufttrennung, d.h. Luft tritt durch Ventil 11B in den Adsorber B, $O_2$-reiches Produktgas verläßt über Ventil 14B den Adsorber und wird an Kompressor G10 abgeführt.

**<u>Zeit 6-30 sec.:</u>**

Am Adsorber A ist nur Ventil 12A offen. Adsorber A wird beispielsweise von 900 mbar über die Vakuumpumpe V 10 auf beispielsweise 250 mbar abgepumpt. Adsorber B ist auf Adsorption (wie unter "Zeit 0-6 sec."), gleichzeitig wird über Ventil 13C $O_2$-reiches Gas über Ventil 18ABC und 16ABC in Adsorber C gefüllt. Am Adsorber C ist nur Ventil 13C geöffnet. Die Füllmenge ist so bemessen, daß am Ende dieses Zeitraumes der Druck im Adsorber C 1.080 bis 1.090 mbar beträgt.

Im nächsten Zyklus trennt Adsorber C die Luft, danach Adsorber A, d.h. die beiden Zeiten "0-6 sec." und "6-30 sec." werden entsprechend wiederholt.

Während der Versuchsdurchführung werden folgende Parameter zusätzlich gemessen:
die $O_2$-reiche Produktmenge,
der Druckverlauf am Adsorptionseintritt während der Abpumpzeit,
die abgepumpte Gasmenge.

Aus abgepumpter Gasmenge und $O_2$-Produktmenge ergibt sich die eingeströmte Luftmenge und daraus die $O_2$-Ausbeute (= $O_2$-Menge im Produkt zu $O_2$-Menge der Luft).

Alle Werte beziehen sich auf eine $O_2$-Konzentration im Produkt von 93 Vol.%. Alle Werte (wie MS-Menge) wurden für eine $O_2$-Menge von 1.000 m³/h umgerechnet.

Der Energiebedarf der Vakuumpumpe wurde aus dem Druckverlauf während des Abpumpens vor der Schüttung errechnet, indem die Kennlinie (= Energiebedarf in Abhängigkeit vom Absaugdruck) eines bekannten Wälzkolbengebläses mit einer Absaugkapazität von 20.000 m³/h bei 1.03 bar herangezogen wurde. Der Energiebedarf des Luftgebläses wurde nach folgender Formel berechnet.

$$\frac{(3.060 \times Pm - 286 \times Vo)}{10.621 \times \mu}$$

Pm = 1045 mbar
Vo = Luftmenge bei 1.03 bar
$\mu$ = Wirkungsgrad = 0,95

**Beispiel 1** (Vergleich; Na-Zeolith X)

Na-Zeolith X entsprechend Probe A wurde im Adsorber eingesetzt. Die $H_2O$-Restbelastung des aktivierten Zeolithen lag unter 0,5 Gew.-% (nach DIN 8948; $P_2O_5$-Methode). Die Zeolithmenge pro Adsorber betrug 190 kg. Die Sauerstoffanreicherung erfolgte gemäß obigen Ausführungen. Folgende Daten wurden ermittelt:

| Temperatur der Luft am Eintritt [°C] | 40 |
|---|---|
| Produktmenge [Nm³/h] | 15,9 |
| $O_2$-Ausbeute [%] | 45,5 |
| Errechneter gesamter Energiebedarf [KWh/Nm³$O_2$] | 0,46 |

**Beispiel 2** (Vergleich; Li-Zeolith X)

Li-Zeolith X entsprechend Probe B wurde im Adsorber eingesetzt (190 kg/Adsorber). Die $H_2O$-Restbelastung des aktivierten Zeolithen lag unter 0,5 Gew.-%. Folgende Daten wurden ermittelt:

| Temperatur der Luft am Eintritt [°C] | 40 |
|---|---|
| Produktmenge [Nm³/h] | 23 |
| $O_2$-Ausbeute [%] | 54 |
| Errechneter gesamter Energiebedarf [KWh/Nm³$O_2$] | 0,375 |

**Beispiel 3** (Vergleich; Li-Zeolith X in der Eintrittszone und Na Zeolith X in der Austrittszone)

Über die Zone mit dem Trockenmittel wurden 95 kg Probe B und darüber 95 kg Probe A in den Adsorber gefüllt. Folgende Daten wurden ermittelt:

| Temperatur der Luft am Eintritt [°C] | 40 |
|---|---|
| Produktmenge [Nm³/h] | 18 |
| $O_2$-Ausbeute [%] | 44,5 |
| Errechneter gesamter Energiebedarf [kWh/Nm³$O_2$] | 0,46 |

**Beispiel 4** (erfindungsgemäß; Na-Zeolith X in der Eintrittszone und Li-Zeolith X in der Austrittszone)

Über die Trockenmittelzone wurden in den Adsorber 95 kg Probe A und darüber 95 kg der Probe B eingefüllt.

| | |
|---|---|
| Temperatur der Luft am Eintritt [°C] | 40 |
| Produktmenge [$Nm^3$/h] | 20,6 |
| $O_2$-Ausbeute [%] | 51,5 |
| Errechneter gesamter Energiebedarf [$KWh/Nm^3O_2$] | 0,378 |

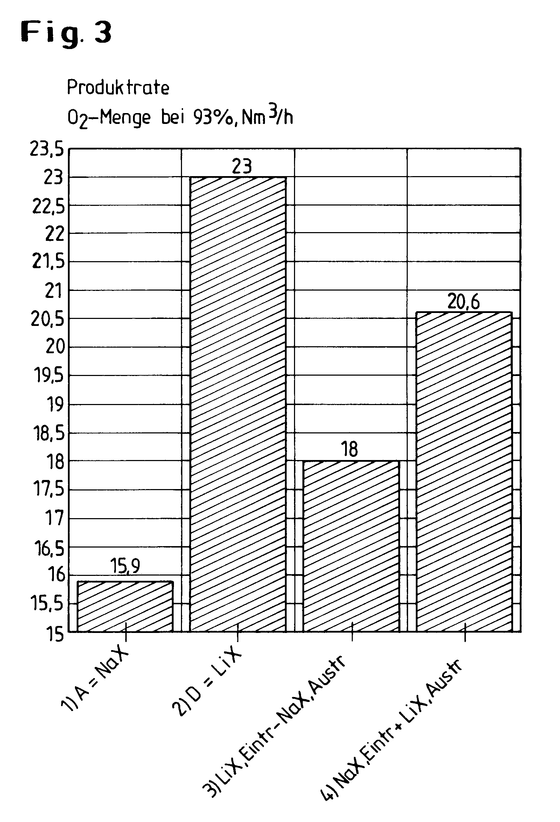

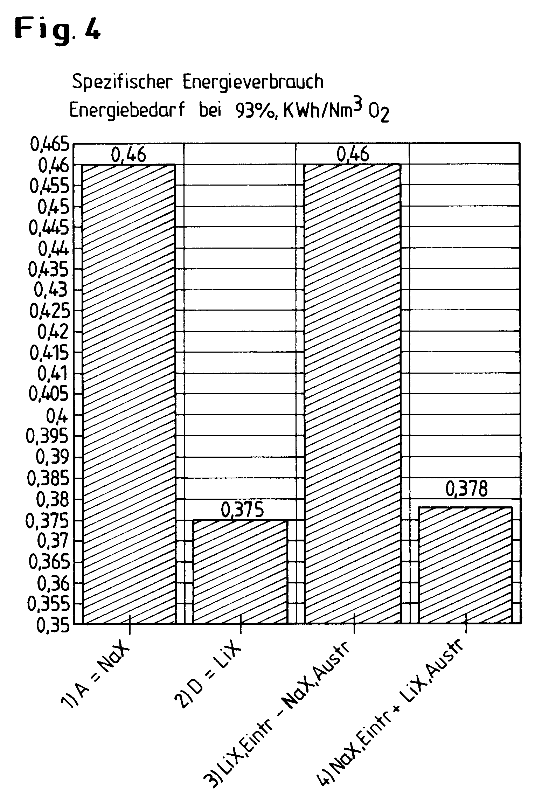

Beispiel 3 liefert sehr schlechte Energiewerte für den erzeugten Sauerstoff (siehe Fig. 3 sowie Fig. 4). Die umgekehrte Reihenfolge der Schüttungen (Beispiel 4) hingegen ergibt gute Werte. Der Energiebedarf ist nahezu identisch mit dem Energiewert der reinen Li-Zeolith-Schüttung (Beispiel 2). Da Lithium-Zeolith X gegenüber Na-Zeolith X wesentlich teurer in der Herstellung ist, kann mit der erfindungsgemäßen Schüttung der Sauerstoff wesentlich preiswerter hergestellt werden.

**Patentansprüche**

1. Verfahren zur selektiven Adsorption von Stickstoff aus Gasgemischen mit weniger polaren Gaskomponenten bei Temperaturen von 20 bis 50°C mittels Druckwechseladsorption, bei dem das Gasgemisch durch einen Adsorber geleitet wird, der mit einer Schüttung aus Zeolithgranulat gefüllt ist, dadurch gekennzeichnet, daß im Adsorber mindestens zwei Schüttungen vorliegen, wobei in der Eintrittszone des Adsorbers ein Na-Zeolith X und in der Austrittszone des Adsorbers ein Li-Zeolith X vorliegt.

2. Verfahren gemäß Anspruch 1, dadurch gekennzeichnet, daß der Li-Zeolith X ein molares $Li_2O/Al_2O_3$-Verhältnis von 0,80 bis 1,0 und ein molares $SiO_2/Al_2O_3$-Verhältnis von 2,0 bis 2,5 aufweist.

3. Verfahren gemäß Anspruch 1, dadurch gekennzeichnet, daß der Na-Zeolith X ein molares $SiO_2/Al_2O_3$-Verhältnis von 2,0 bis 3,0 aufweist.

4. Verfahren gemäß Anspruch 1, dadurch gekennzeichnet, daß der Li-Zeolith X in einer Menge von 20 bis 80 Gew.-%, bezogen auf die Gesamtmenge der Schüttung im Adsorber, vorliegt.

# Fig. 1

N2-Adsorptionsisothermen
Temperatur 25°C
Beladung [N1 N2/kg Zeolith]

Druck [mbar]

—□— Probe   A, Na-Zeolith X   —■— Probe   B, Li-Zeolith X

EP 0 757 919 A1

# Fig. 2

16ABC  18ABC

17ABC

G10

13A  14A  13B  14B  13C  14C

15A  15B  15C

A  B  C

C10  H10  11A  12A  11B  12B  11C  12C

V10

8

# Fig. 3

Produktrate
$O_2$–Menge bei 93%, $Nm^3/h$

Bar chart values:
- 1) A = NaX: 15,9
- 2) D = LiX: 23
- 3) LiX,Eintr-NaX,Austr: 18
- 4) NaX,Eintr+LiX,Austr: 20,6

# Fig. 4

Spezifischer Energieverbrauch
Energiebedarf bei 93%, KWh/Nm$^3$ O$_2$

**Europäisches Patentamt**

# EUROPÄISCHER RECHERCHENBERICHT

Nummer der Anmeldung

EP 96 11 2062

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| P,X | US 5 529 610 A (WATSON CHARLES F ET AL) 25.Juni 1996 * das ganze Dokument * --- | 1,4 | B01D53/047 B01D53/04 B01J20/18 |
| X,D | EP 0 546 542 A (PRAXAIR TECHNOLOGY INC) 16.Juni 1993 * Seite 3, Zeile 39 - Zeile 43 * * Seite 4, Zeile 22 - Zeile 33; Ansprüche 1-10 * --- | 1-4 | |
| X | EP 0 537 597 A (PRAXAIR TECHNOLOGY INC) 21.April 1993 * Spalte 12, Zeile 31 - Zeile 56 * * Spalte 18, Zeile 56 - Spalte 19, Zeile 21 * --- | 1,3 | |
| A | DATABASE WPI Section Ch, Week 8807 Derwent Publications Ltd., London, GB; Class E36, AN 88-046752 XP002018871 & JP 63 004 824 A (TOYO SODA MFG KK) , 9.Januar 1988 * Zusammenfassung * --- | 1,4 | |
| A | DATABASE WPI Section Ch, Week 8732 Derwent Publications Ltd., London, GB; Class E36, AN 87-224219 XP002018872 & JP 62 148 304 A (NIPPON SANSO KK) , 2.Juli 1987 * Zusammenfassung * ----- | 1,4 | |

**RECHERCHIERTE SACHGEBIETE (Int.Cl.6)**

B01D
B01J

Der vorliegende Recherchenbericht wurde für alle Patentansprüche erstellt

| Recherchenort | Abschlußdatum der Recherche | Prüfer |
|---|---|---|
| DEN HAAG | 19.November 1996 | Eijkenboom, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

                              
& : Mitglied der gleichen Patentfamilie, übereinstimmendes Dokument

EPO FORM 1503 03.82 (P04C03)